# EUROPEAN PATENT SPECIFICATION

(11) **EP 1 868 351 B1**
(45) Date of publication and mention of the grant of the patent: **23.11.2011**
(21) Application number: 06115358.1
(22) Date of filing: 13.06.2006
(51) Int. Cl.: H04L 29/08

(54) **File distribution system**
Dateienverteilungssystem
Système de distribution de fichiers

(43) Date of publication of application: 19.12.2007
(73) Proprietor: Microsoft Corporation, Redmond, WA 98052 (US)
(72) Inventor: Brandel, Jonas, 18, Dublin (IE); Kargodorian, Aram, Redmond, WA 98052 (US); Fleuchaus, Lucius, Redmond, WA 98052 (US); Chung, James, Redmond, WA 98052 (US); Fan, Jiang, Redmond, WA 98052 (US)
(74) Representative: Wallis, Helen Frances Mary

(56) References cited:
- EP-A- 1 427 170
- EP-A2- 1 199 861
- WO-A-2004/104759
- US-A1- 2003 225 835
- US-B1- 6 848 108

## Description

### BACKGROUND

There are many situations where large volumes of data need to be transferred between companies or between remotely located teams within the same company. Small files can be sent as attachments to email messages, however this is not feasible for large files or for large volumes of files. Sending large volumes of data between locations is problematic. Existing solutions require the data to be uploaded somewhere, such as a website or ftp server, by the sender of the files. The sender then notifies the intended recipient that the data is available and the recipient must then download the data, which requires the recipient to log on to the website or ftp server and start the download of each file manually. This process leads to large time lags between the sender uploading the data and the recipient receiving it. Furthermore, if the download fails for any reason, the recipient must start the download of the file again (even if they have already downloaded a large proportion of the file). Where the volume of data being transferred is large and the connection speed low in comparison, the time delay whilst the download occurs can cause further problems and as the volume of data being transferred increases the problems become significantly worse. Additionally, there may be security concerns with these solutions. HTTPS (HyperText Transfer Protocol Secure) can be used for security for downloading from a website, however downloading from an ftp server is completely insecure with the password being passed over the network in clear text.

European Patent Application EP 1 427 170 describes a peer-to-peer content broadcast mechanism in which each node that has or receives a file advertises possession of the file so that other nodes may obtain the file therefrom. In an embodiment, a generation identifier is associated with each copy of a file to prevent two nodes, each having only part of a file, from attempting to retrieve the remainder of the file from each other.

### SUMMARY

The following presents a simplified summary of the disclosure in order to provide a basic understanding to the reader. This summary is not an extensive overview of the disclosure and it does not identify key/critical elements of the invention or delineate the scope of the invention. Its sole purpose is to present some concepts disclosed herein in a simplified form as a prelude to the more detailed description that is presented later.

A file distribution server, system and method of file distribution are described. Files are distributed between servers and before files are sent from a first server to a second server, details about the files are sent to the second server. The second server determines whether the files are already held at the second server and then requests only those files which are not already held. In response to receiving the request, the requested files are sent by the first server to the second server.

The present example provides a file distribution server comprising: a processor; a first memory; and a second memory arranged to cause the processor to: extract a group of files from a file store connected to the file distribution server; store the group of files in the first memory, the group of files comprising more than one file; push a message comprising details associated with each file in the group of files to a second file distribution server; and in response to a request received from the second file distribution server, to transmit at least one of the files from the group of files to the second file distribution server.

Advantageously, this enables files to be distributed in a quick, efficient, scalable, secure manner. The second memory may be further arranged to cause the processor to: divide the at least one of the files into a plurality of messages of a predetermined size for transmission if the size of the at least one of the files exceeds a first threshold, and combine the at least one of the files with other data for transmission to the second server to create a message of a predetermined size if the size of the at least one of the files is below a second threshold.

The second memory may be further arranged to cause the processor, prior to storing the group of files, to: receive a message comprising the details associated with each file in the group of files from a third file distribution server; determine from the details whether any of the group of files are stored in the first memory and where at least one of the files from the group of files are not stored in the first memory, to send a request for the at least one of the files from the group of files to the third file distribution server; and receive the at least one of the files from the group of files from the third file distribution server.

The second memory may be further arranged to cause the processor to: receive a message comprising details associated with each file in a second group of files from a fourth file distribution server, the second group of files comprising at least one file; determine from the details whether any of the second group of files are stored in the first memory; and where at least one of the files from the second group of files are not stored in the first memory, to send a request for the at least one of the files from the second group of files to the fourth file distribution server; to receive the requested at least one of the files from the second group of files from the fourth file distribution server; and to store the received at least one of the files from the second group of files in the first memory.

The second memory may be further arranged to cause the processor to: output the received at least one of the files from the second group of files to a file store.

The first and the second memory may be the same.

A second example provides a file distribution server comprising: a processor; a first memory; and a second memory arranged to cause the processor to: receive a pushed message comprising details associated with each file in a group of files from another file distribution server, the group of files comprising more than one file; determine from the details whether any of the files in the group of files are stored in the first memory and where at least one of the files from the group of files are not stored in the first memory, to send a request for the at least one of the files from the group of files to the other file distribution server; receive the at least one of the files from the group of files from the other file distribution server; store the received files in the first memory; and to output the received files to a file store connected to the file distribution server.

The second memory may be further arranged to cause the processor to: access a set of rules; and to output the received files to the file store connected to the file distribution server based on the set of rules.

A third example provides a file distribution system comprising one or more file distribution servers as described above.

A fourth example provides a method of distributing files comprising, at a first server: extracting a group of files from a file store connected to the first server; storing the group of files at the first server, the group of files comprising more than one file; pushing a message comprising details associated with each file in the group of files to a second server; and in response to a request received from the second server, transmitting at least one of the files from the group of files to the second server.

Advantageously, this provides an efficient, symmetric, scalable, secure and reliable file distribution method.

Preferably transmitting at least one of the files from the group of files comprises: where the size of the at least one of the files exceeds a first threshold, dividing the at least one of the files into a plurality of messages of a predetermined size; where the size of the at least one of the files is below a second threshold, combining the at least one of the files with other data for transmission to the second server to create a message of a predetermined size; and transmitting the messages of the predetermined size.

Advantageously, this enables the transmission medium and / or techniques to be optimised for messages of the predetermined size.

Preferably transmitting the messages of the predetermined size uses MSMQ.

Advantageously, this provides robust and reliable method of file distribution which can recover rapidly from network outages or other network problems.

The method may further comprise, at the second server: receiving the message comprising details associated with each file in the group of files from a first server; determining from the details whether any of the group of files are stored in the second server; and where at least one of the files from the group of files are not stored in the second server, sending a request for the at least one of the files from the group of files to the first server; receiving the requested at least one of the files from the group of files from the first server; and storing the files received from the first server at the second server.

The method may further comprise: at the second server, outputting the files received from the first server to a file store connected to the second server.

Preferably, outputting the files received from the first server to a file store comprises: accessing a set of rules; and outputting the files received from the first server to a file store based on the set of rules.

The method may further comprise, at the second server: pushing a message comprising details associated with each file in the group of files to a third server; and in response to a request received from the third server, transmitting at least one of the files from the group of files to the third server.

Advantageously, this provides a method of file distribution with built-in routing capabilities. By negotiating on a hop-by-hop process, the efficiency of the method is increased.

Preferably, the details associated with each file in the group of files comprise at least one of: a file name, a CRC, a file size, a file creation date and a file editing date.

A fifth example provides a computer program comprising computer program code means adapted to perform all the steps at any one of the servers, as described above, when said program is run on a computer.

The computer program may be embodied on a computer readable medium.

The method may be performed by software in machine readable form on a storage medium. The software can be suitable for execution on a parallel processor or a serial processor such that the method steps may be carried out in any suitable order, or simultaneously.

This acknowledges that software can be a valuable, separately tradable commodity. It is intended to encompass software, which runs on or controls "dumb" or standard hardware, to carry out the desired functions. It is also intended to encompass software which "describes" or defines the configuration of hardware, such as HDL (hardware description language) software, as is used for designing silicon chips, or for configuring universal programmable chips, to carry out desired functions.

Many of the attendant features will be more readily appreciated as the same becomes better understood by reference to the following detailed description considered in connection with the accompanying drawings.

### DESCRIPTION OF THE DRAWINGS

The present description will be better understood from the following detailed description read in light of the accompanying drawings, wherein:
FIG. 1 is a schematic diagram of a first file distribution system;
FIG. 2 shows a first example flow diagram showing the operation of a Rainbow server at the sending location and a second example flow diagram showing the operation of a Rainbow server at the receiving location;
FIG. 3 is a schematic diagram of a second file distribution system;
FIG. 4 is an example flow diagram showing the operation of an intermediate Rainbow server;
FIG. 5 shows an example message flow for the file distribution system of FIG. 3;
FIG. 6 is a schematic diagram of a third file distribution system;
FIG. 7 shows a second example message flow; and
FIG. 8 shows a schematic diagram of a network of Rainbow servers.

Like reference numerals are used to designate like parts in the accompanying drawings.

### DETAILED DESCRIPTION

The detailed description provided below in connection with the appended drawings is intended as a description of the present examples and is not intended to represent the only forms in which the present example may be constructed or utilized. The description sets forth the functions of the example and the sequence of steps for constructing and operating the example. However, the same or equivalent functions and sequences may be accomplished by different

### examples.

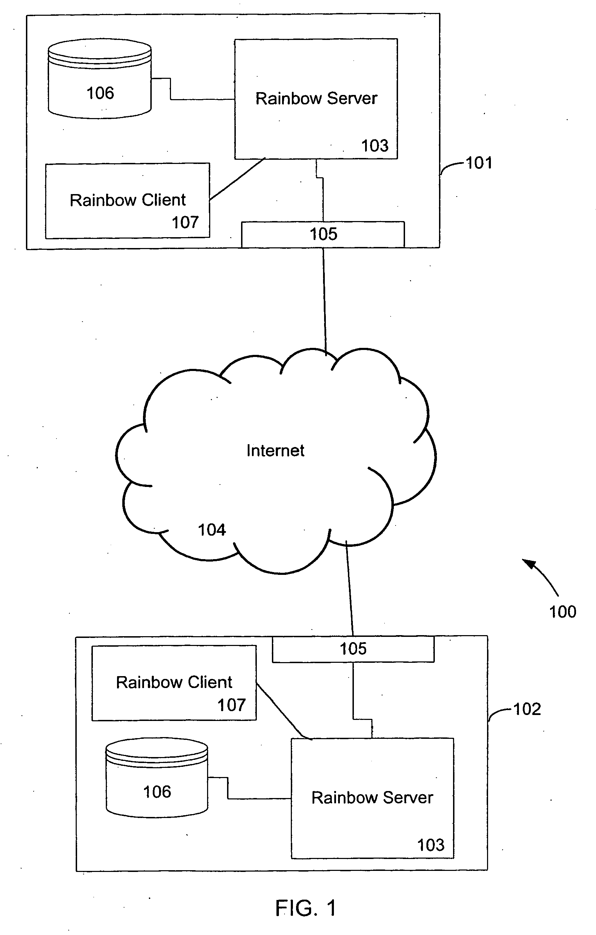

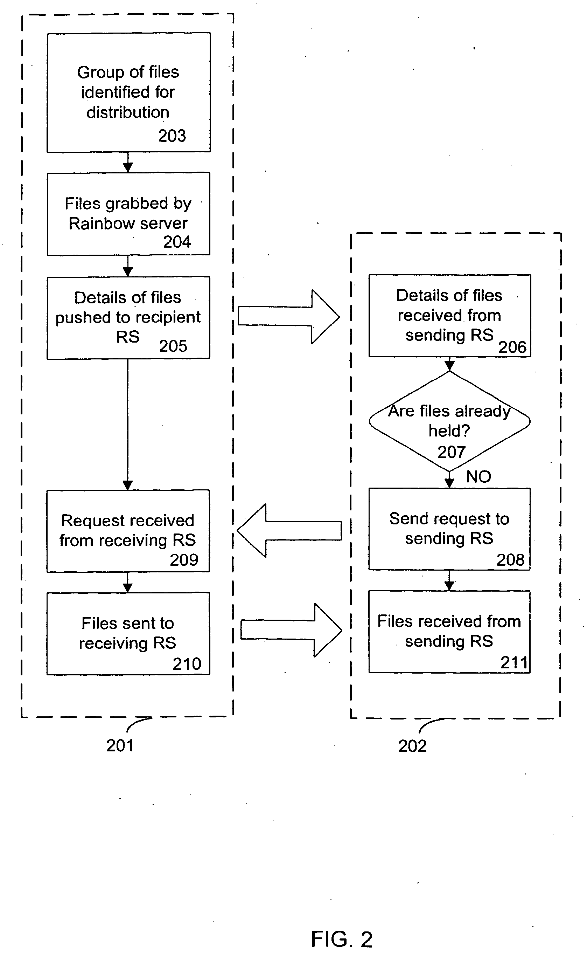

FIG. 1 is a schematic diagram of a file distribution system 100 which enables files to be transferred between a first location 101 and a second location 102. At each location 101, 102, there is a Rainbow server (RS) 103 which is connected to the internet 104 via a firewall 105. The Rainbow server 103 is also connected to a file store 106 and a Rainbow client 107. The operation of the system 100 can be described with reference to FIG. 2, which shows a first example flow diagram 201 showing the operation of the Rainbow server at the sending location and a second example flow diagram 202 showing the operation of the Rainbow server at the receiving location.

A group of files to be transferred are identified (step 203) by a user via the Rainbow client 107 and one or more recipients for the group are also identified. The recipients identified are other Rainbow servers within the system (e.g. Rainbow server 103 at location 102). The identified group of files are then grabbed by the Rainbow server (step 204) and stored on the Rainbow server. Details of the files in the group are then pushed to the recipient Rainbow server (step 205). The details of the files may include one or more of: the file size, the file name, a CRC (cyclic redundancy check), the date of creation, the date of editing etc. for each file in the group. Upon receipt of these details (step 206), the receiving Rainbow server checks whether the files in the group have already been received or are already stored on the receiving Rainbow server (step 207). The details enable the receiving Rainbow server to determine whether any copies of a file in the group that have already been received are earlier versions of the files that the sending Rainbow server is trying to send. If some or all of the files are not already held at the receiving Rainbow server, the receiving Rainbow server sends a request for those files to the sending Rainbow server (step 208). If for example, the group comprises four files (files A-D), of which two (files C and D) have already been received at the receiving Rainbow server but, of these two, one (file C) has been subsequently updated such that the group contains a newer version of the file, then the receiving Rainbow server will (in step 208) request sending of three files (files A-C) from the group but not the fourth file (file D).

The sending Rainbow server receives the request from the receiving Rainbow server (step 209) and in response sends those files from the group which have been requested to the receiving Rainbow server (step 210). The receiving Rainbow server receives these files (step 211) and confirms that the files have been received correctly using the details, such as the file sizes and CRCs, already received (in step 206). The receiving Rainbow server may then send an acknowledgement back to the sending Rainbow server to confirm that the files have all been successfully received. Having received the new files from the sending Rainbow server, a message may also be displayed to a user at the receiving location via the Rainbow client 107 at that location.

The group of files which are identified (in step 203) may comprise one or more files or may alternatively comprise no (zero) files. In the situation where the group of files does not contain any files, the method allows the sending and receiving of structures (as described in more detail below).

By using a method as described above, there is no delay in the receipt of files at the receiving location because the files are pushed to the receiving location from the sending location and will be available for use by a user at the receiving location as soon as the user is notified without any further actions by the user being required. This means that the file transfer may occur when the user is not present (e.g. outside of the user's working day) and be available for the user as soon as they start work. Furthermore, as only the changes are transmitted, the number and volume of files sent over the system is minimized, creating an efficient file transfer method. The method enables a user to transfer files from their desktops (via the Rainbow client) directly to the desktops of other users at other locations without the need for any of the users to log on to a website, an ftp server or any other place.

As the Rainbow server grabs and stores the files (in step 204), the file access and file transfer stages are decoupled. This means that a group of files, once grabbed, can be sent to one set of recipients on one occasion and the same group of files can subsequently be sent to another set of recipients, even if the content of the files in the file store has changed in the intervening period. The files stored at the Rainbow server may remain there until they are deleted by a user via the Rainbow client or the Rainbow server may delete files periodically (e.g. after 90 days).

The Rainbow client 107 comprises an application which runs on a computer and provides an interface to a Rainbow server. The Rainbow server 103 may comprise a processor (e.g. a single or dual processor > 2.2GHz), one or more hard disks and RAM, running Win Server 2003 and SQL Server 2000.

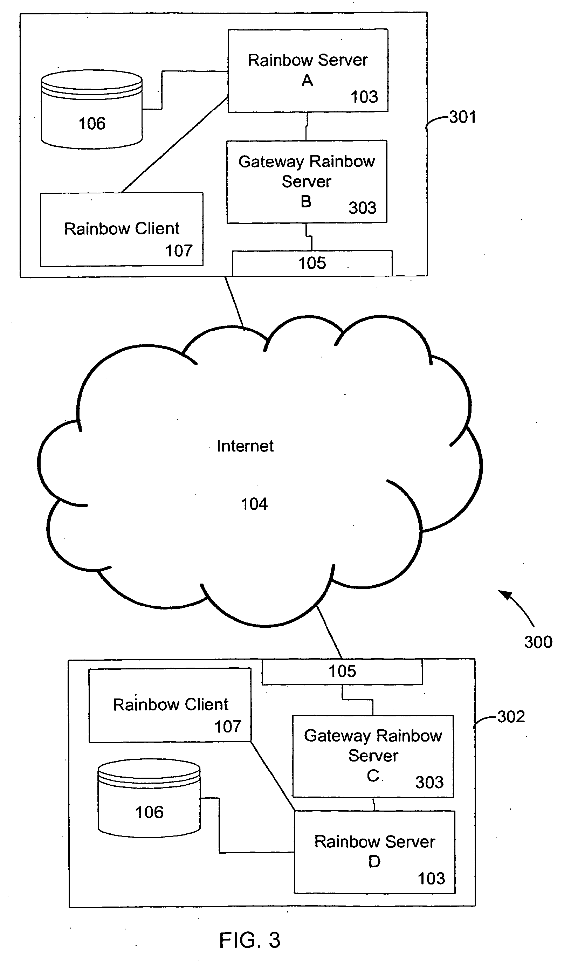

FIG. 3 is a schematic diagram of a second file distribution system 300 which is similar to that shown in FIG. 1. At each location 301, 302, in the system 300 shown in FIG. 3, there is a gateway Rainbow server 303 in addition to the Rainbow server 103. The gateway Rainbow server 303 is located between the Rainbow server 103 and the firewall 105. The gateway Rainbow server 303 may be the same as or similar to the Rainbow server 103 however it is not connected to a file store or a Rainbow client. The benefit of including a gateway Rainbow server 303 at a location is that it increases the system security because the server that is connected to the local file system is not also connected to the internet. The gateway Rainbow server 303 therefore can be located outside of a corporate intranet and provides an additional barrier to a hacker attempting to access the files stored at the location or within the corporation to which the location belongs.

In the system 300, files to be sent from the Rainbow server 103 at the first location 301 to the Rainbow server 103 at the second location must be sent via the gateway Rainbow server 303 at the first location and the gateway Rainbow server at the second location. The routing between Rainbow servers is done on a hop-by-hop basis such that each Rainbow server need only know the address of the next Rainbow server in the chain from the original sending Rainbow server to the intended recipient Rainbow server. For purposes of explanation, the Rainbow servers shown in FIG. 3 are labelled A-D, with Rainbow server A (RS A) being the sending Rainbow server, Rainbow server D (RS D) being the intended recipient of the group of files and Rainbow servers B and C (RS B and RS C) being the intermediate (gateway) Rainbow servers.

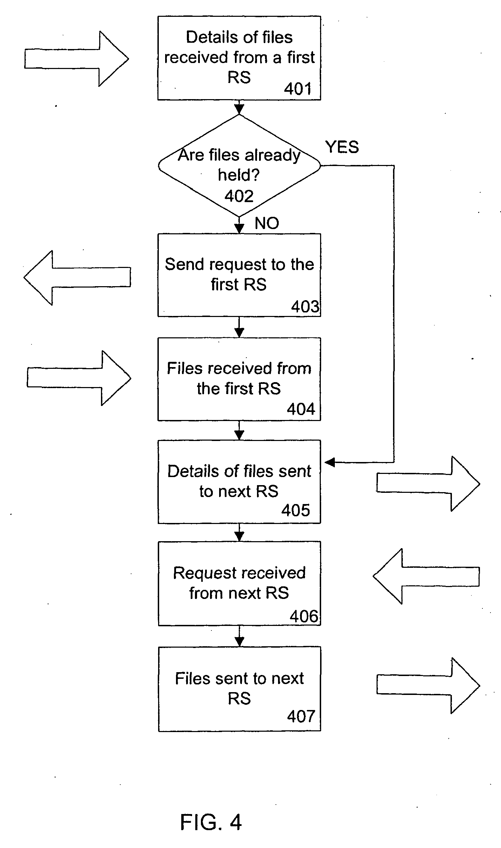

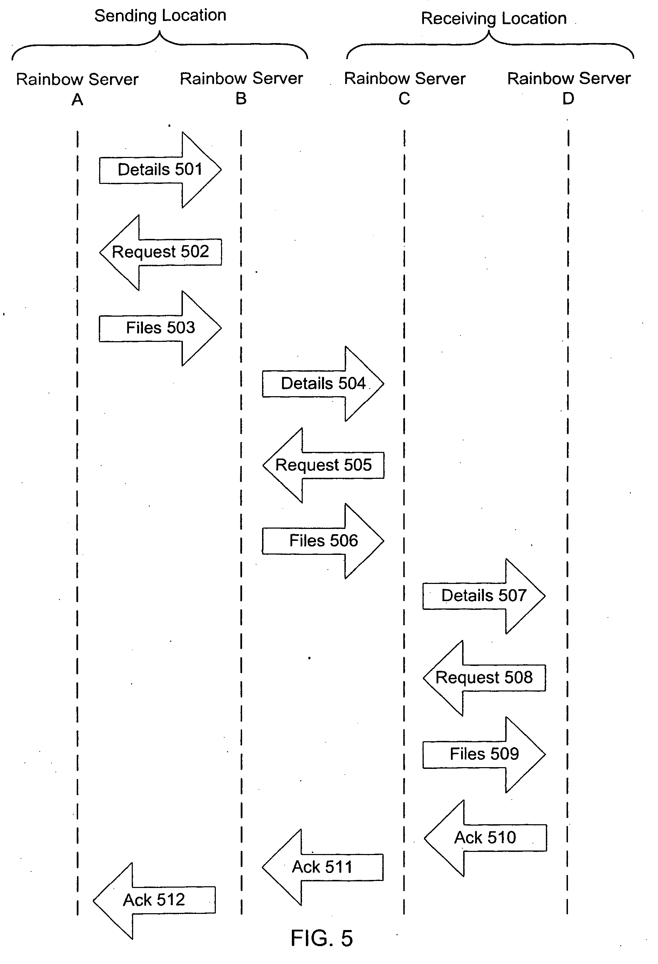

The operation of system 300 can be described with reference to FIGS. 2, 4 and 5. The operation of the original sending Rainbow server (RS A) is as shown in FIG. 2 flow diagram 201 and the operation of the intended recipient Rainbow server (RS D) is as shown in FIG. 2 flow diagram 202. The operation of the intermediate Rainbow servers (the gateway Rainbow servers 303, RS B and RS C) is as shown in FIG. 4 and an example message flow in the system 300 is shown in FIG. 5.

As described above, a group of files to be transferred and one or more recipients for the group are identified by a user via the Rainbow client 107 (step 203). These files are then grabbed by Rainbow server A (step 204) and stored on the Rainbow server. Details of the files 501 in the group are then pushed (step 205) to the next Rainbow server along the path to the intended recipient Rainbow server. In this case, the next Rainbow server is Rainbow server B. Upon receipt of these details (step 401), Rainbow server B checks whether the files in the group have already been received or are already stored on the Rainbow server (step 402). If some or all of the files are not already held at Rainbow server B, the Rainbow server sends a request 502 for those files to the Rainbow server from which it received the details (step 403), which in this case is Rainbow server A. Rainbow server A receives the request 502 from the intermediate Rainbow server B (step 209) and in response sends those files 503 from the group which have been requested by Rainbow server B to Rainbow server B (step 210).

Having received the files (in step 404) or having determined that the files were already held at Rainbow server B (in step 402), Rainbow server B forwards the details 504 of the files onto the next Rainbow server along the path to the intended recipient Rainbow server (step 405). In this example, the next Rainbow server is the gateway Rainbow server at the second location (RS C). Rainbow server C receives these details (step 401), determines whether the files are already held (step 402) and if not sends a request 505 back to the Rainbow server B (step 403). Rainbow server B receives the request from Rainbow server C (step 406) and sends the requested files 506 to Rainbow server C (step 407).

The process then continues at Rainbow server C in the same manner as previously explained in relation to Rainbow server B. Having received the files (in step 404) or having determined that the files were already held at Rainbow server C (in step 402), Rainbow server C forwards the details 507 of the files onto the next Rainbow server (step 405). In this example, the next Rainbow server is the intended recipient Rainbow server, Rainbow server D. Rainbow server D receives these details (step 206), determines whether the files are already held (step 207) and if not sends a request 508 back to the Rainbow server C (step 208). Rainbow server C receives the request from Rainbow server D (step 406) and sends the requested files 509 to Rainbow server D (step 407). Upon receipt of the files (in step 211), Rainbow server D confirms that the files have been received correctly using the details already received (in step 206). The receiving Rainbow server may then send an acknowledgement 510-512 back to Rainbow server A (via Rainbow servers C and B) to confirm that the files have all been successfully received. A message may be displayed to a user at the receiving location via the Rainbow client 107 at that location to alert them that the files have been received. A message may also be displayed to a user at the sending location via the Rainbow client 107 at that location to confirm that the files have been received by the intended recipient.

In addition to the intended recipient Rainbow server (e.g. Rainbow server D) performing checks on the received files, the intermediate Rainbow servers (e.g. Rainbow servers B and C) may also perform the same or a subset of the checks on the files received prior to forwarding them to the next Rainbow server. For example, each intermediate Rainbow server may check the CRC of each of the received file to confirm that each file has not been corrupted in transmission from the previous Rainbow server. This is beneficial because it minimises the amount of corrupted data which is transferred by the system and therefore increases the system's overall efficiency.

It will be appreciated that although the message flow shown in FIG. 5 includes requests 502, 505, 508 at each hop in the file transfer, if any Rainbow server already has the files identified in the file details messages 501, 504, 507 no request will be required and if the Rainbow server is an intermediate Rainbow server (e.g. Rainbow server B or C) the details will immediately be forwarded onto the next Rainbow server in the path to the intended recipient.

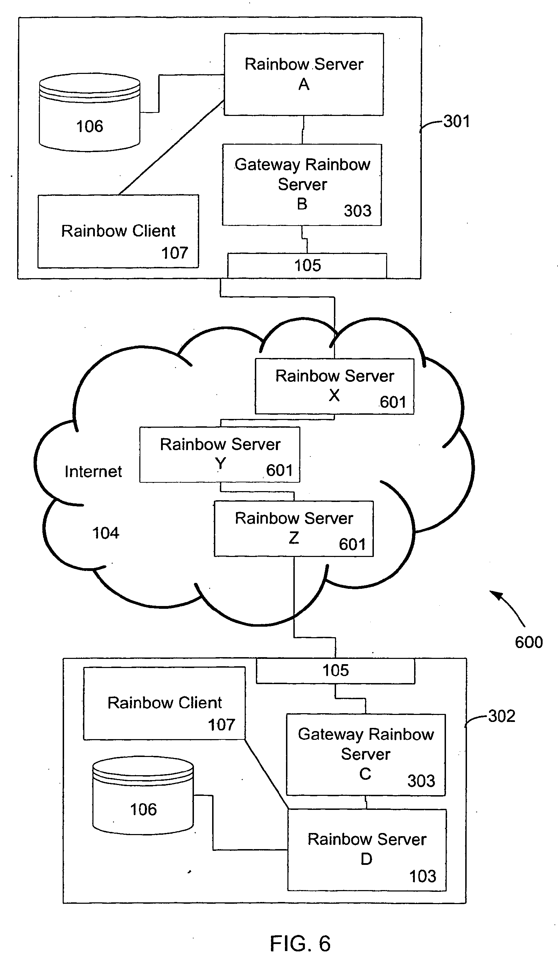

In the above description, the details and files pass directly from the gateway Rainbow server (RS B) at the sending location 301 to the gateway Rainbow server (RS C) at the receiving location 302. However, in some situations there may be one or more additional intermediate Rainbow servers through which the messages pass as shown in FIG. 6. FIG. 6 is a schematic diagram of a third file distribution system 600 which is similar to that shown in FIGS. 1 and 3. Within the internet 104 there are a number of intermediate Rainbow servers 601, labelled Rainbow server X-Z, through which the messages pass. The operation of each intermediate Rainbow server is as shown in FIG. 4 and described above. These intermediate Rainbow servers may comprise Rainbow servers at other locations, e.g. gateway Rainbow servers 303 or Rainbow servers 103 with clients 107 and file stores 106 connected to them (not shown in FIG. 6). Rainbow servers that are not gateway Rainbow servers but do not have a Rainbow client connected to them may be referred to as routing Rainbow servers. Data stored at intermediate Rainbow servers may be deleted as soon as it has been transferred to the next Rainbow server. Alternatively, the data may remain on the Rainbow server for a period of time. The period of time may be fixed or may be configured on a group by group or other basis.

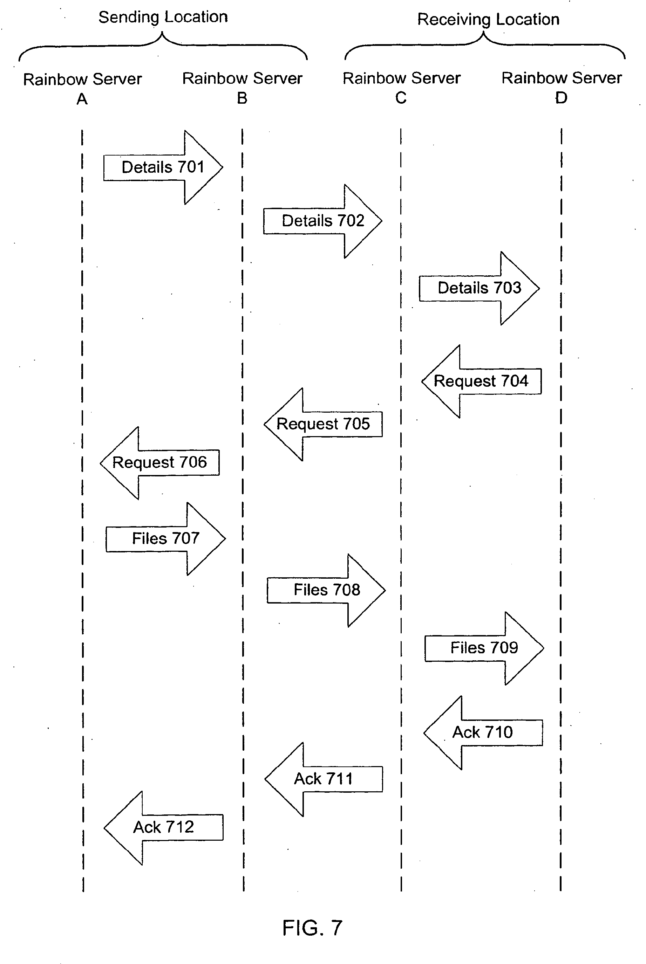

In the above description, the negotiation to determine whether the files need to be sent occurs at each hop. However, in another embodiment, the requests may be passed from the sending Rainbow server to the recipient Rainbow server, via any intermediate Rainbow servers and the determination of whether the group of files are already held may only occur at the recipient Rainbow server. In this embodiment, the sending Rainbow server operates as shown in FIG. 2 flow diagram 201 and the receiving Rainbow server operates as shown in FIG. 2 flow diagram 202. The intermediate Rainbow servers, however, just forward on messages received to the next hop in the path either from the sender to the recipient or from the recipient to the sender Rainbow server, as shown in the example message flow of FIG. 7. The details of the group of files are passed 701-703 from Rainbow server A to Rainbow server D. Rainbow server D determines whether the files are already held there and if they are not, Rainbow server D sends a request 704-706 back to Rainbow server A. In response to receiving the request 706, Rainbow server A sends the files 707-709 to Rainbow server D and Rainbow server D confirms that they have been received 710-712.

As described above, the routing between Rainbow servers is performed on a hop-by-hop basis. This means that each Rainbow server need only know the address (e.g. the IP address or machine address) of the next hop in the path to the intended recipient of any message (e.g. a message containing file details, files or an acknowledgement). Each intermediate Rainbow server may hold a routing table which maps intended recipients to the forwarding address, for example, for Rainbow server B in FIG. 6:

| | |
|---|---|
| Recipient Server | Forwarding Address |
| Rainbow server A | Rainbow server A |
| Rainbow server D | Rainbow server X |

The use of hop-by-hop routing provides a very scalable system because Rainbow servers do not need to be aware of all the other Rainbow servers within the system and additional Rainbow servers can be easily added and this only requires updates to be provided to some / all of the routing tables held by other Rainbow servers. Use of hop-by-hop routing also means that it is not necessary for any of the servers to maintain any state information and the system does not need an overall management framework.

The Rainbow servers may be configured to only transmit messages to and receive messages from particular addresses (e.g. particular IP addresses or machine addresses). This can be implemented, for example, by only permitting communication with the addresses specified in the routing table or in a stored list. This provides a very secure file distribution system because a rogue third party that sets up a Rainbow server will not receive any data from the Rainbow servers within the system because the address of the rogue Rainbow server will not be on the approved list (e.g. routing table or stored list) of any of the Rainbow servers in the system. Furthermore, any request sent by the rogue Rainbow server to any Rainbow server in the system will be blocked because it will not originate from an approved address.

The Rainbow servers may, in addition or instead, be configured to filter and / or block files or groups of files based on particular addresses. These may be implemented to improve the security and / or to prevent the hand back of files overwriting existing files in the originators file store.

In order to provide security for a recipient (or other user) to access their local Rainbow server, integrated windows security based on windows ACLs (access control lists) may be used so only authenticated users with permissions to the objects, i.e. the server, groups, packages etc can perform the actions.

When transmitting messages from a Rainbow server, the Rainbow server collects together small messages going to the same location into a message of a predetermined size (e.g. 256 KB) and splits large messages (e.g. messages containing files) into multiple messages of a predetermined size. Where a file is split into multiple messages, each message is coded such that a receiving Rainbow server can recreate the file once all the messages have been received. The coding may also enable the receiving Rainbow server to request resending of any of the messages that are not successfully received. The bundling / splitting of messages has the benefit that the file transfer system can be optimized for transport of messages of the predetermined size and also, if there is a network outage or other problem during the transmission of a large file, it is only necessary to resend the remaining messages (i.e. the remaining parts of the file) and not the entire file. This bundling and splitting of messages may occur for all types of messages whether they are files, file details, acknowledgements or any other message type and may occur on a hop-by-hop basis.

The bundling of small messages into a message of a predetermined size may lead to delays in the sending of messages whilst the Rainbow server waits for sufficient small messages to send to a particular Rainbow server. In order that this delay does not become problematic, in some embodiments, a maximum delay may be specified such that if after the maximum delay, there is still less than the predetermined amount of data to send to a particular Rainbow server, the message may still be transferred. The transferred message may either be smaller than the predetermined size or alternatively, the message may be padded such that it is the predetermined size.

In addition to splitting large files as described above, the Rainbow server may also perform compression on the files prior to sending. In an example, files of a size of less than a threshold size (e.g. 100 MB) may be compressed. Files over the threshold may not be compressed because of the processor (and memory etc) load that would be involved in compressing such large files. Furthermore files of this size are often already compressed and consequently further compression would provide minimal benefits.

The transfer of the messages of predetermined size between Rainbow servers may use an asynchronous file transfer method such as Microsoft Message Queuing (MSMQ) technology or other message queuing implementation. Message queuing implementations, such as MSMQ, use persistent message queues for storing messages. Use of such a message queuing implementation, the application sending the message receives an acknowledgement as soon as the message is stored in the message queue. The message can then be passed to the recipient application in a process which is decoupled from the sending application and the message is only deleted from the message queue when the receiving application receives the message. Should a network outage occur the messages remaining in the message queue can be resent once the network is restored. This provides a high level of reliability and recoverability from network outages or latencies. In another embodiment, the transfer may use a synchronous file transfer method; however this may introduce delays in waiting for responses from remote Rainbow servers (the sending and transmission processes are not decoupled).

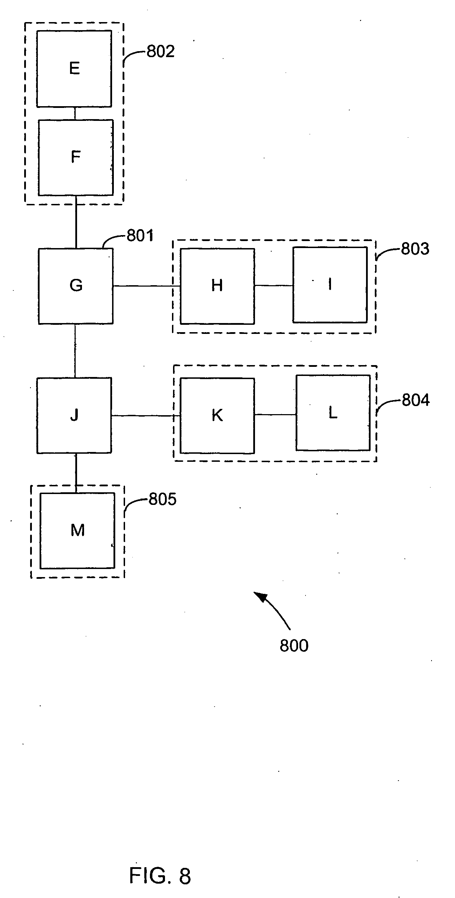

As described above, the systems use hop-by-hop routing, which means that multicasting (i.e. the sending of the same message to multiple recipients) can be performed very efficiently. This can be described with reference to FIG. 8 which shows a schematic diagram of a network 800 of Rainbow servers 801. If Rainbow server E at a first location 802, wishes to transmit a large new group of files to Rainbow servers I, L and M at three other locations 803-805, a single copy of the group can be transmitted from Rainbow server E to Rainbow server G. One copy of the group can then be transmitted to Rainbow server H and on to Rainbow server I, whilst another copy can be transmitted to Rainbow server J. At Rainbow server J, a copy of the group can be transmitted to Rainbow server L via Rainbow server K and another copy can be transmitted to Rainbow server M. The amount of data being transmitted between Rainbow servers A and J has been reduced significantly because only a single copy of the group is transmitted instead of three (one for each recipient Rainbow server).

Although system 100 in FIG. 1 shows each location having a single Rainbow server 103 and system 300 in FIG. 3 shows each location having two Rainbow servers 103, 303, this is by way of example only. As shown in FIG. 8 a system may comprise some locations having a gateway Rainbow server (locations 802-804) and some not having a gateway Rainbow server (location 805).

Files received at a Rainbow server which is the intended recipient of those files (e.g. Rainbow server D in FIG. 3) may remain stored on the Rainbow server. However, in addition or instead, they may be pushed into a file store 106 at the receiving location by the recipient Rainbow server. The push of files may be performed automatically upon receipt of a group of files or alternatively it may occur in response to an input received from a user via a Rainbow client. A set of rules may be stored by the Rainbow server to determine where received files are pushed to and these rules may be established by the user via the Rainbow client 107 at the receiving location. These rules may be stored in a dynamic link library (DLL) or in an ActiveX script.

The file structure in the recipient's Rainbow server may be imposed by the sender of the group of files. If the recipient does not remap this structure, the same structure may be pushed into the recipient's file store. This imposed structure at the receiving Rainbow server may be particularly beneficial where a sending party distributes subsets of a large collection of files to recipients and then after the recipients have amended the files, the amended subsets are sent back to the original sending party. In such a situation, the sending party may require that their Rainbow server can automatically push the received amended files into the correct positions within the large collection of files. Data detailing the required file structure may be provided to the receiving Rainbow server along with the file details, with the groups of files itself or in a separate message. The file structure may only be established at the final recipient Rainbow server and not at any intermediate Rainbow servers.

In an example, the files may relate to localisation of a software product, which contains 100,000 files in 100 different languages. In such an example the sender's file structure may be of the form:
Software package
   - Application 1
      - English
      - French
      - German
      - Spanish
   - Application 2
      - English
      - French
      - German
      - Spanish
   - Application 3
      - English
      - French
      - German
      - Spanish
The sending party may send the French files to a first party for review, the German files to a second party to review etc. It may therefore be beneficial to enforce the same file structure at each of the recipient's file store, even though many folders will be empty (e.g. all the folders except for French for the first party), so that when the amended files are passed back by each of the recipients, they can be pushed automatically back into the sender's file structure by the sender's Rainbow server.

In addition to (or instead of) sending a message which enforces a file structure at the recipient, the sending Rainbow server may send a message to the receiving Rainbow server which forces a structure for a group of files upon transfer back to the sending Rainbow server. For example, in the example given above, the sending Rainbow server may not require the first party to set up a file structure which is the same as that used at the sending Rainbow server, however, they may require that when the translated files are sent back to the sending party, that they have a specified file structure, such as:
Software package
   - Application 1
      - French
   - Application 2
      - French
   - Application 3
      - French
This again enables the amended files received at the sending Rainbow server to be pushed automatically back into the sender's file structure.

A Rainbow server that has provided files to another Rainbow server may cause the files to be sent back to the sending Rainbow server by sending a message (e.g. a rule as describe above) to initiate transfer of those files. When the message (e.g. the rule) is activated it causes a group of files to be transferred. This enables a sending Rainbow server to maintain control over a group of files even when they are stored at a receiving Rainbow server.

In the systems shown in FIGS. 1, 3 and 6 show Rainbow servers 103 which are connected to a single file store. It will be appreciated that a Rainbow server may be connected to many file stores and these file stores may be of different types, such as File System, Visual Source Safe (VSS) and other source control systems The Rainbow server may include interfaces to one or more different types of file store such that files can be sent from one file store type (e.g. VSS) and at the receiving Rainbow server these files may be pushed into a different file store type.

The transfer of files within the file distribution systems described above may occur when initiated by a user via a Rainbow client or alternatively the system may operate in an unattended mode such that file transfer occurs according to a defined schedule. For example, a user may specify, via a Rainbow client, that a particular group of files should be transferred at a particular time or periodically (e.g. every night at midnight). The file grab process (step 204) may occur at any time prior to the transfer (e.g. at the time that the scheduled transfer is set up or directly before the transfer occurs). Where a periodic file transfer schedule is established, the file negotiation process, as described above, will ensure that only changes to the groups are actually transferred over the system to the recipient Rainbow server. When setting a transfer schedule, the Rainbow server may be configured to grab any updated files from the file store immediately before transferring the files to ensure that the latest versions are always transferred.

Although the above description describes negotiation between Rainbow servers occurring at every hop, in some circumstances, a sending Rainbow server may force the sending of files to a receiving Rainbow server by sending all of the files irrespective of whether the Rainbow server has already received them and therefore may not have requested the files.

Although the systems 100, 300, 600 show the Rainbow servers being connected by the internet 104, this is by way of example only and the Rainbow servers may be connected by any network including, but not limited to, an intranet, a local area network, a wide area network etc. Furthermore, although the operation of the systems is described for transfer of files, the system is agnostic to the actual type of files being transferred and therefore the system may be used in many situations, for example, it may be used as a messaging infrastructure.

A Rainbow server may be configured to log every transfer including details of the transfer such as the file size and CRC, and this information may be subsequently used for trouble shooting or any other purpose.

The systems described above have the advantages that they are symmetric (there is no master-slave relationship), scalable, secure and have built in routing.

Although the present examples are described and illustrated herein as being implemented in a PC based system, the system described is provided as an example and not a limitation. As those skilled in the art will appreciate, the present examples are suitable for application in a variety of different types of processing systems.

Those skilled in the art will realize that storage devices utilized to store program instructions can be distributed across a network. For example, a remote computer may store an example of the process described as software. A local or terminal computer may access the remote computer and download a part or all of the software to run the program. Alternatively, the local computer may download pieces of the software as needed, or execute some software instructions at the local terminal and some at the remote computer (or computer network). Those skilled in the art will also realize that by utilizing conventional techniques known to those skilled in the art that all, or a portion of the software instructions may be carried out by a dedicated circuit, such as a DSP, programmable logic array, or the like.

The term 'computer' is used herein to refer to any device with processing capability such that it can execute instructions. Those skilled in the art will realise that such processing capabilities are incorporated into many different devices and therefore the term 'computer' includes PCs, servers, mobile telephones, personal digital assistants and many other devices

Any range or device value given herein may be extended or altered without losing the effect sought, as will be apparent to the skilled person.

The steps of the methods described herein may be carried out in any suitable order, or simultaneously where appropriate.

It will be understood that the above description of a preferred embodiment is given by way of example only and that various modifications may be made by those skilled in the art.

## Claims

1. A file distribution server (103; 303; 601) comprising:
a processor;
a first memory; and
a second memory arranged to cause the processor to:
extract a group of files from a file store connected to the file distribution server (106);
store the group of files in the first memory, the group of files comprising more than one file;
push a message comprising details associated with each file in the group of files to a second file distribution server; and
in response to a request received from the second file distribution server, to transmit at least one of the files from the group of files to the second file distribution server.

2. The file distribution server according to claim 1, wherein the second memory is further arranged to cause the processor to:
divide the at least one of the files into a plurality of messages of a predetermined size for transmission if the size of the at least one of the files exceeds a first threshold, and
combine the at least one of the files with other data for transmission to the second server to create a message of a predetermined size if the size of the at least one of the files is below a second threshold.

3. The file distribution server according to any of the preceding claims, wherein the second memory is further arranged to cause the processor, prior to storing the group of files, to:
receive a message comprising the details associated with each file in the group of files from a third file distribution server;
determine from the details whether any of the group of files are stored in the first memory and where at least one of the files from the group of files are not stored in the first memory, to send a request for the at least one of the files from the group of files to the third file distribution server; and
receive the at least one of the files from the group of files from the third file distribution server.

4. The file distribution server according to any of the preceding claims, wherein the second memory is further arranged to cause the processor to:
receive a message comprising details associated with each file in a second group of files from a fourth file distribution server, the second group of files comprising at least one file;
determine from the details whether any of the second group of files are stored in the first memory; and
where at least one of the files from the second group of files are not stored in the first memory, to send a request for the at least one of the files from the second group of files to the fourth file distribution server;
to receive the requested at least one of the files from the second group of files from the fourth file distribution server; and
to store the received at least one of the files from the second group of files in the first memory.

5. The file distribution server according to claim 4, wherein the second memory is further arranged to cause the processor to:
output the received at least one of the files from the second group of files to a file store (106).

6. The file distribution server according to any of the preceding claims, wherein the first and the second memory are the same.

7. A file distribution server (103; 303; 601) comprising:
a processor;
a first memory; and
a second memory arranged to cause the processor to:
receive a pushed message comprising details associated with each file in a group of files from another file distribution server, the group of files comprising more than one file;
determine from the details whether any of the files in the group of files are stored in the first memory; and
where at least one of the files from the group of files are not stored in the first memory, to send a request for the at least one of the files from the group of files to the other file distribution server;
to receive the requested at least one of the files from the group of files from the other file distribution server;
to store the received files in the first memory; and
to output the received files to a file store connected to the file distribution server (106).

8. The file distribution server according to claim 7, wherein the second memory is further arranged to cause the processor to:
access a set of rules; and
to output the received files to the file store connected to the file distribution server based on the set of rules.

9. A file distribution system comprising:
a file distribution server according to any of claims 1-6; and
a file distribution server according to claim 7 or 8.

10. A method of distributing files comprising, at a first server:
extracting a group of files from a file store (106) connected to the first server;
storing the group of files at the first server, the group of files comprising more than one file;
pushing a message comprising details associated with each file in the group of files to a second server; and
in response to a request received from the second server, transmitting at least one of the files from the group of files to the second server.

11. The method according to claim 10, wherein transmitting at least one of the files from the group of files comprises:
where the size of the at least one of the files exceeds a first threshold, dividing the at least one of the files into a plurality of messages of a predetermined size;
where the size of the at least one of the files is below a second threshold, combining the at least one of the files with other data for transmission to the second server to create a message of a predetermined size; and
transmitting the messages of the predetermined size.

12. The method according to claims 11, wherein transmitting the messages of the predetermined size uses MSMQ.

13. The method according to any of claims 10-12, further comprising, at the second server:
receiving the message comprising details associated with each file in the group of files from a first server;
determining from the details whether any of the group of files are stored in the second server; and
where at least one of the files from the group of files are not stored in the second server, sending a request for the at least one of the files from the group of files to the first server;
receiving the requested at least one of the files from the group of files from the first server; and
storing the files received from the first server at the second server.

14. The method according to claim 13, further comprising:
at the second server, outputting the files received from the first server to a file store (106) connected to the second server.

15. The method according to claim 14, wherein outputting the files received from the first server to a file store comprises:
accessing a set of rules; and
outputting the files received from the first server to a file store based on the set of rules.

16. The method according to claim 13, further comprising, at the second server:
pushing a message comprising details associated with each file in the group of files to a third server; and
in response to a request received from the third server, transmitting at least one of the files from the group of files to the third server.

17. The method according to any of claims 10-16, wherein the details associated with each file in the group of files comprises at least one of: a file name, a CRC, a file size, a file creation date and a file editing date.

18. A computer program comprising computer program code means adapted to perform all the steps of any of claims 10-12 when said program is run on a computer.

19. A computer program as claimed in claim 18 embodied on a computer readable medium.

## Patentansprüche

1. Dateiverteilungsserver (103; 303; 601) umfassend:
einen Prozessor;
einen ersten Speicher; und
einen zweiten Speicher, der ausgelegt ist, den Prozessor zu veranlassen:
eine Gruppe von Dateien aus einem mit dem Dateiverteilungsserver (106) verbundenen Dateispeicher zu extrahieren;
die Gruppe von Dateien im ersten Speicher zu speichern, wobei die Gruppe von Dateien mehr als eine Datei umfasst;
eine Nachricht, die Details umfasst, die jeder Datei in der Gruppe von Dateien zugeordnet sind, auf einen zweiten Dateiverteilungsserver zu schieben; und
in Reaktion auf eine vom zweiten Dateiverteilungsserver empfangene Anfrage, wenigstens eine der Dateien aus der Gruppe von Dateien zum zweiten Dateiverteilungsserver zu übertragen.

2. Dateiverteilungsserver gemäß Anspruch 1, wobei der zweite Speicher ferner ausgelegt ist, den Prozessor zu veranlassen:
die wenigstens eine der Dateien in eine Vielzahl von Nachrichten einer vorbestimmten Größe zur Übertragung aufzuteilen, falls die Größe der wenigstens einen der Dateien einen ersten Schwellwert überschreitet, und
die wenigstens eine der Dateien mit weiteren Daten zur Übertragung zum zweiten Server zu kombinieren, um eine Nachricht einer vorbestimmten Größe zu erzeugen, falls die Größe der wenigstens einen der Dateien unterhalb eines zweiten Schwellwerts ist.

3. Dateiverteilungsserver gemäß einem der vorhergehenden Ansprüche, wobei der zweite Speicher ferner ausgelegt ist, den Prozessor vor einem Speichern der Gruppe von Dateien zu veranlassen:
eine Nachricht, die Details umfasst, die jeder Datei in der Gruppe von Dateien zugeordnet sind, von einem dritten Dateiverteitungsserver zu empfangen;
aus den Details zu bestimmen, ob eine oder mehrere Dateien der Gruppe von Dateien im ersten Speicher gespeichert sind und in dem Fall, in dem wenigstens eine der Dateien aus der Gruppe von Dateien nicht im ersten Speicher gespeichert ist, eine Anfrage nach der wenigstens einen der Dateien aus der Gruppe von Dateien an den dritten Dateiverteilungsserver zu senden; und
die wenigstens eine der Dateien aus der Gruppe von Dateien vom dritten Dateiverteilungsserver zu empfangen.

4. Dateiverteitungsserver gemäß einem der vorhergehenden Ansprüche, wobei der zweite Speicher ferner ausgelegt ist, den Prozessor zu veranlassen:
eine Nachricht, die Details umfasst, die jeder Datei in einer zweiten Gruppe von Dateien zugeordnet sind, von einem vierten Dateiverteitungsserver zu empfangen, wobei die zweite Gruppe von Dateien wenigstens eine Datei umfasst;
aus den Details zu bestimmen, ob eine oder mehrere Dateien der zweiten Gruppe von Dateien im ersten Speicher gespeichert sind, und
in dem Fall, in dem wenigstens eine der Dateien aus der zweiten Gruppe von Dateien nicht im ersten Speicher gespeichert ist, eine Anfrage nach der wenigstens einen der Dateien aus der zweiten Gruppe von Dateien an den vierten Dateiverteilungsserver zu senden;
die angefragte wenigstens eine der Dateien aus der zweiten Gruppe von Dateien vom vierten Dateiverteilungsserver zu empfangen; und
die empfangene wenigstens eine der Dateien aus der zweiten Gruppe von Dateien im ersten Speicher zu speichern.

5. Dateiverteilungsserver gemäß Anspruch 4, wobei der zweite Speicher ferner ausgelegt ist, den Prozessor zu veranlassen:
die empfangene wenigstens eine der Dateien aus der zweiten Gruppe von Dateien an einen Dateispeicher (106) auszugeben.

6. Dateiverteilungsserver gemäß einem der vorhergehenden Ansprüche, wobei der erste und der zweite Speicher derselbe sind.

7. Dateivedeilungsserver (103; 303; 601) umfassend:
einen Prozessor;
einen ersten Speicher; und
einen zweiten Speicher, der ausgelegt ist, den Prozessor zu veranlassen:
eine geschobene Nachricht, die Details umfasst, die jeder Datei in einer Gruppe von Dateien zugeordnet sind, von einem weiteren Dateiverteilungsserver zu empfangen, wobei die Gruppe von Dateien mehr als eine Datei umfasst;
aus den Details zu bestimmen, ob eine oder mehrere der Dateien in der Gruppe von Dateien im ersten Speicher gespeichert sind, und
in dem Fall, in dem wenigstens eine der Dateien aus der Gruppe von Dateien nicht im ersten Speicher gespeichert ist, eine Anfrage nach der wenigstens einen der Dateien aus der Gruppe von Dateien an den weiteren Dateiverteilungsserver zu senden;
die angefragte wenigstens eine der Dateien aus der Gruppe von Dateien vom weiteren Dateivertellungsserver zu empfangen,
die empfangenen Dateien im ersten Speicher zu speichern; und
die empfangenen Dateien an einen mit dem Dateiverteilungsserver (106) verbundenen Dateispeicher auszugeben.

8. Dateiverteilungsserver gemäß Anspruch 7, wobei der zweite Speicher ferner ausgelegt ist, den Prozessor zu veranlassen:
auf einen Satz von Regeln zuzugreifen; und
die empfangen Dateien an den mit dem Dateiverteilungsserver verbundenen Datenspeicher auf der Grundlage des Satzes von Regeln auszugeben.

9. Dateiverteilungssystem, umfassend:
einen Dateiverteilungsserver gemäß einem der Ansprüche, 1-6; und
einen Dateiverteilungsserver gemäß Anspruch 7 oder 8.

10. Verfahren zum Verteilen von Dateien, welches umfasst, bei einem ersten Server:
Extrahieren einer Gruppe von Dateien aus einem mit dem ersten Server verbundenen Dateispeicher (106);
Speichern der Gruppe von Dateien beim ersten Server, wobei die Gruppe von Dateien mehr als eine Datei umfasst;
Schieben einer Nachricht, die Details umfasst, die jeder Datei in der Gruppe von Dateien zugeordnet sind, auf einen zweiten Server; und
in Reaktion auf eine vom zweiten Server empfangene Anfrage, Übertragen wenigstens einer der Dateien aus der Gruppe von Dateien zum zweiten Server.

11. Verfahren gemäß Anspruch 10, wobei ein Übertragen wenigstens einer der Dateien aus der Gruppe von Dateien umfasst:
in dem Fall, in dem die Größe der wenigstens einen der Dateien einen ersten Schwellwert überschreitet, Aufteilen der wenigstens einen der Dateien in eine Vielzahl von Nachrichten einer vorbestimmten Größe;
in dem Fall, in dem die Größe der wenigstens einen der Dateien unterhalb zweiten Schwellwerts ist, Kombinieren der wenigstens einen der Dateien mit weiteren Daten zur Übertragung zum zweiten Server, um eine Nachricht einer vorbestimmten Größe zu erzeugen; und
Übertragen der Nachrichten der vorbestimmten Größe.

12. Verfahren gemäß Anspruch 11, wobei das Übertragen der Nachrichten der vorbestimmten Größe MSMQ. benutzt.

13. Verfahren gemäß einem der Ansprüche 10-12, welches ferner umfasst, beim zweiten Server:
Empfangen der Nachricht, die Details umfasst, die jeder Datei in der Gruppe von Dateien zugeordnet sind, von einem ersten Server;
Bestimmen aus den Details, ob eine oder mehrere Dateien der Gruppe von Dateien im zweiten Server gespeichert sind; und
in dem Fall, in dem wenigstens eine oder mehrere Dateien der Gruppe von Dateien nicht im zweiten Server gespeichert sind, Sendern einer Anfrage nach der wenigstens einen der Dateien aus der Gruppe von Dateien an den ersten Server;
Empfanden der angefragten wenigstens einen der Dateien aus der Gruppe von Dateien vom ersten Server; und
Speichern der vom ersten Server empfangenen Dateien beim zweiten Server.

14. Verfahren gemäß Anspruch 13, welches ferner umfasst:
beim zweiten Server, Ausgeben der vom ersten Server empfangenen Dateien an einen mit dem zweiten Server verbundenen Datenspeicher (106).

15. Verfahren gemäß Anspruch 14, wobei ein Ausgeben der vom ersten Server empfangenen Dateien an einen Datenspeicher umfasst:
Zugreifen auf einen Satz von Regeln; und
Ausgeben der vom ersten Server empfangenen Dateien an einen Datenspeicher auf der Grundlage des Satzes von Regeln.

16. Verfahren gemäß Anspruch 13, welches ferner umfasst, beim zweiten Server:
Schieben einer Nachricht, die Details umfasst, die jeder Datei in der Gruppe von Dateien zugeordnet sind, auf einen dritten Server; und
in Reaktion auf eine vom dritten Server empfangene Anfrage, Übertragen wenigstens einer der Dateien aus der Gruppe von Dateien zum dritten Server.

17. Verfahren gemäß einem der Ansprüche 10-16, wobei die Details, die jeder Datei in der Gruppe von Dateien zugeordnet sind, wenigstens eines umfassen aus: Dateiname, ein CRC, eine Dateigröße, ein Dateierzeugungsdatum und ein Dateieditierdatum.

18. Computerprogramm, welches ein Computerprogrammcodemittel umfasst, das ausgelegt ist, alle Schritte der Ansprüche 10-12 durchzuführen, wenn das Programm auf einem Computer läuft.

19. Computerprogramm gemäß Anspruch 18, das auf einem computerlesbaren Medium verkörpert ist.

## Revendications

1. Serveur de distribution de fichiers (103 ; 303 ; 601), comprenant :
- un processeur ;
- une première mémoire ; et
- une seconde mémoire agencée pour faire en sorte que le processeur :
- extraie un groupe de fichiers d'une mémoire, de fichiers connectée au serveur de distribution de fichiers (106) ;
- mémorise le groupe de fichiers dans la première mémoire, le groupe de fichiers comprenant plus d'un fichiers ;
- avance un message comprenant des informations détaillées associées à chaque fichier du groupe de fichiers vers une deuxième serveur de distribution de fichiers ; et,
- en réponse à une demande reçue depuis le deuxième serveur de distribution de fichiers, transmettre au moins un fichier du groupe de fichiers au deuxième serveur de distribution de fichiers.

2. Serveur de distribution de fichiers selon la revendication 1, dans lequel la seconde mémoire est en outre agencée pour faire en sorte que le processeur :
- divise l'au moins un fichier en une pluralité de messages d'une taille prédéterminée pour leur transmission si la taille de l'au moins un fichier dépasse un premier seuil ; et
- combine l'au moins un fichier avec d'autres données pour leur transmission au deuxième serveur afin de créer un message d'une taille prédéterminée si la taille de l'au moins un fichier est inférieure à un second seuil.

3. Serveur de distribution de fichiers selon l'une quelconque des revendications précédentes, dans lequel la seconde mémoire est en outre agencée pour faire en sorte que le processeur, avant de mémoriser le groupe de fichiers :
- reçoive un messages comprenant les informations détaillées associées à chaque fichier du groupe de fichiers depuis un troisième serveur de distribution de fichiers ;
- détermine à partir des informations détaillées si certains fichiers du groupe de fichiers sont mémorisés dans la première mémoire, et, si au moins un fichier du groupe de fichiers n'est pas mémorisé dans la première mémoire, envoie une demande de l'au moins un fichier du groupe de fichiers au troisième serveur de distribution de fichier ; et
- reçoive l'au moins un fichier du groupe de fichiers depuis le troisième serveur de distribution de fichiers.

4. Serveur de distribution de fichiers selon l'une quelconque des revendications précédentes, dans lequel la seconde mémoire est en outre agencée pour faire en sorte que le processeur :
- reçoive un message comprenant des informations détaillées associées à chaque fichier d'un second groupe de fichiers depuis un quatrième serveur de distribution de fichiers, le second groupe de fichiers comprenant au moins un ficher ;
- détermine à partir des informations détaillées si certains fichiers du second groupe de fichiers sont mémorisés dans la première mémoire ; et,
- si au moins un fichier du second groupe de fichiers n'est pas mémorisé dans la première mémoire, envoie une demande de l'au moins un fichier du second groupe de fichiers au quatrième serveur de distribution de fichiers ;
- reçoive l'au moins un fichier demandé du second groupe de fichiers depuis le quatrième serveur de distribution de fichiers ; et
- mémorisé l'au moins un fichier reçu du second groupe de fichiers dans la première mémoire.

5. Serveur de distribution de fichiers selon la revendication 4, dans lequel la seconde mémoire est en outre agencée pour faire en sorte que le processeur :
- fournisse en sortie l'au moins un fichier reçu du second groupe de fichiers à une mémoire de fichiers (106).

6. Serveur de distribution de fichiers selon l'une quelconque des revendications précédentes, dans lequel la première et la seconde mémoire sont la même mémoire.

7. Serveur de distribution de fichiers (103 ; 303 ; 601), comprenant :
- un processeur ;
- une première mémoire ; et
- une seconde mémoire agencée pour faire en sorte que le processeur :
- reçoive un message avancé comprenant des informations détaillées associées à chaque fichier d'un groupe de fichiers depuis un autre serveur de distribution de fichiers, le groupe de fichiers comprenant plus d'un fichier ;
- détermine à partir des informations détaillées si certains des fichiers du groupe de fichiers sont mémorisés dans la première mémoire; et,
- si au moins un fichier du groupe de fichiers n'est pas mémorisé dans la première mémoire, envoie une demande de l'au moins un fichier du groupe de fichiers à l'autre serveur de distribution de fichiers ;
- reçoive l'au moins un fichier demandé du groupe de fichiers depuis l'autre serveur de distribution de fichiers :
- mémorise les fichiers reçus dans la première mémoire ; et
- fournisse en sortie les fichiers reçus à une mémoire de fichiers connectée au serveur de distribution de fichiers (106).

8. Serveur de distribution de fichiers selon la revendication 7, dans lequel la seconde mémoire est en outre agencée pour faire en sorte que le processeur :
- accède à un ensemble de règles ; et
- fournisse en sortie les fichiers reçus à la mémoire de fichiers connectée au serveur de distribution de fichiers en fonction de l'ensemble de règles.

9. Système de distribution de fichiers comprenant :
- un serveur de distribution de fichier selon l'une quelconque des revendications 1 à 6 ; et
- un serveur de distribution de fichier selon la revendication 7 ou 8.

10. Procédé de distribution de fichiers, comprenant, au niveau d'un premier serveur, les étapes consistant à :
- extraire un groupe de fichiers d'une mémoire de fichiers (106) connectée au premier serveur ;
- mémoriser le groupe de fichiers au niveau du premier serveur, le groupe de fichiers comprenant plus d'un fichier ;
- avancer un message comprenant des informations détaillées associées à chaque fichier du groupe de fichiers vers un deuxième serveur ; et,
- en réponse à une demande reçue depuis le deuxième serveur, transmettre a moins un fichier du groupe de fichiers au deuxième serveur.

11. Procédé selon la revendication 10, dans lequel l'étape de transmission d'au moins un fichier du groupe de fichiers comprend, les étapes consistant à :
- si la taille de l'au moins une des fichiers dépasse un premier seuil, diviseur l'au moins un des fichiers en une pluralité de messages d'une taille prédéterminée ;
- si la taille de l'au moins un des fichiers est inférieure à un second seuil, combiner l'au moins un des fichiers avec d'autres données pour leur transmission au deuxième serveur afin de créer un message d'une taille prédéterminée ; et
- transmettre les messages de la taille prédéterminée.

12. Procédé selon la revendication 11, dans lequel l'étape de transmission des messages de la taille prédéterminée utilise le protocole MSMQ.

13. Procédé selon l'une quelconque des revendication 10 à 12, comprenant en outre, au niveau du deuxième serveur, les étapes consistant à :
- recevoir le message comprenant des informations détaillées associées à chaque fichier du groupe de fichiers depuis un premier serveur ;
- déterminer à partir des informations détaillées si certains fichiers du groupe de fichiers sont mémorisés dans le deuxième serveur ; et
- si au moins un des fichiers du groupe de fichiers n'est pas mémorisé dans le deuxième serveur, envoyer une demande de l'au moins un des fichiers du groupe de fichiers au premier serveur ;
- recevoir l'au moins un fichier demandé du groupe de fichiers depuis le premier serveur ; et
- mémoriser les fichiers reçus depuis le premier serveur au niveau du deuxième serveur.

14. Procédé selon la revendication 13, comprenant en outre l'étape consistant à :
- au niveau du deuxième serveur, fournir en sortie les fichiers reçus depuis le premier serveur à une mémoire de fichiers (106) connectée au deuxième serveur.

15. Procédé selon la revendication 14, dans lequel l'étape consistant à fournir en sortie les fichiers reçus depuis le premier serveur à une mémoire de fichiers comprend les étapes consistant à :
- accéder à un ensemble de règles ; et
- fournir en sortie les fichiers reçus depuis le premier serveur à une mémoire de fichiers en fonction de l'ensemble de règles.

16. Procédé selon la revendication 13, comprenant en outre, au niveau du deuxième serveur, les étapes consistant à :
- avancer un message comprenant des informations détaillées associées à chaque fichier du groupe de fichiers vers un troisième serveur ; et,
- en réponse à une demande reçue depuis le troisième serveur, transmettre au moins un des fichiers du groupe de fichiers au troisième serveur.

17. Procédé selon l'une quelconque des revendications 10 à 16, dans lequel les informations détaillées associées à chaque fichier du groupe de fichiers comprennent au moins une information parmi : un nom de fichier, un contrôle de redondance cyclique CRC, une taille de fichier, une date de création de fichier et une date de modification de fichier.

18. Programme informatique comprenant des moyens de codage de programme d'ordinateur adaptés à effectuer toutes les étapes de l'une quelconque des revendications 10 à 12 lorsque ledit programme est exécuté sur un ordinateur.

19. Programme informatique selon la revendication 18, réalisé sur un support lisible par un ordinateur.
